(19) Europäisches Patentamt
European Patent Office
Office européen des brevets

(11) **EP 4 443 943 A1**

(12) **EUROPEAN PATENT APPLICATION**

(43) Date of publication:
**09.10.2024 Bulletin 2024/41**

(21) Application number: **24166164.4**

(22) Date of filing: **26.03.2024**

(51) International Patent Classification (IPC):
**H04W 24/02** (2009.01)    **H04W 88/12** (2009.01)
**H04L 41/16** (2022.01)    **G06N 20/00** (2019.01)

(52) Cooperative Patent Classification (CPC):
**H04W 24/02;** G06N 20/00; H04L 41/16;
H04W 88/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 FI 20235376**

(71) Applicant: **Nokia Solutions and Networks Oy
02610 Espoo (FI)**

(72) Inventors:
• KAK, Ahan
  Summit - NJ (US)
• BURA, Archana
  Summit - NJ (US)
• CHOI, NAKJUNG
  Florham Park - NJ (US)

(74) Representative: **Laine IP Oy
Porkkalankatu 24
00180 Helsinki (FI)**

(54) **RADIO RESOURCE MANAGEMENT**

(57) According to an example aspect of the present invention, there is provided an apparatus configured to obtain, from user equipment-level operating statistics from a radio access network, network slice-level operating statistics concerning plural network slices in the radio access network, update, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determine, based on the cost indices, radio resource configurations for the plural network slices, and control the radio access network to provide radio resources to the plural network slices according to the determined radio resource configurations.

| |
|---|
| Obtaining, from UE-level operating statistics from a RAN, network slice-level operating statistics concerning plural slices in the RAN  510 |
| Updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index  520 |
| Determining, based on the cost indices, radio resource configurations for the plural network slices  530 |
| Controlling the radio access network to provide radio resources to the plutal network slices according to the determined radio resource configurations  540 |

FIGURE 5

EP 4 443 943 A1

**Description**

FIELD

The present disclosure relates to managing radio resources in communication networks supporting plural network slices.

BACKGROUND

Physical wireless communication networks may be subdivided into plural network slices, such that each network slice is allocated resources of the physical network and appears logically as a separate network to users.
Network slicing enables more effective utilization of installed physical networking resources. To enable operation of network slices as logical networks, network slices traverse all domains of the network: radio access, transport, core network, network edge and central clouds. Within the scope of radio access networks network slicing primarily refers to slicing of radio resources of a physical radio access network to plural network slices.

SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.
According to a first aspect of the present disclosure, there is provided an apparatus comprising at least one processing core and at least one memory storing instructions that, when executed by the at least one processing core, cause the apparatus at least to obtain, from user equipment-level operating statistics from a radio access network, network slice-level operating statistics concerning plural network slices in the radio access network, update, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determine, based on the cost indices, radio resource configurations for the plural network slices, and control the radio access network to provide radio resources to the plural network slices according to the determined radio resource configurations.
According to a second aspect of the present disclosure, there is provided a method comprising obtaining, from user equipment-level operating statistics from a radio access network, network slice-level operating statistics concerning plural network slices in the radio access network, updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determining, based on the cost indices, radio resource configurations for the plural network slices, and controlling the radio access network to provide radio resources to the plural network slices according to the determined radio resource configurations.
According to a third aspect of the present disclosure, there is provided an apparatus comprising means for obtaining, from user equipment-level operating statistics from a radio access network, network slice-level operating statistics concerning plural network slices in the radio access network, updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determining, based on the cost indices, radio resource configurations for the plural network slices, and controlling the radio access network to provide radio resources to the plural network slices according to the determined radio resource configurations.
According to a fourth aspect of the present disclosure, there is provided a non-transitory computer readable medium having stored thereon a set of computer readable instructions that, when executed by at least one processor, cause an apparatus to at least obtain, from user equipment-level operating statistics from a radio access network, network slice-level operating statistics concerning plural network slices in the radio access network, update, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determine, based on the cost indices, radio resource configurations for the plural network slices, and control the radio access network to provide radio resources to the plural network slices according to the determined radio resource configurations.

According to a fifth aspect of the present disclosure, there is provided a computer program comprising instructions which, when executed by an apparatus, cause the apparatus to perform at least the following: obtain, from user equipment-level operating statistics from a radio access network, network slice-level operating statistics concerning plural network slices in the radio access network, update, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index, determine, based on the cost indices, radio resource configurations for the plural network slices, and control the radio access network to provide radio resources to the plural network slices according to the determined radio resource configurations.

BRIEF DESCRIPTION OF THE DRAWINGS

FIGURE 1 illustrates an example system in accordance with at least some embodiments of the present invention;

FIGURE 2A illustrates a reinforcement learning approach;

FIGURE 2B is a flow chart of an algorithm in accordance with at least some embodiments of the present invention;

FIGURE 3 illustrates an example apparatus capable of supporting at least some embodiments of the present invention;

FIGURE 4 illustrates signalling in accordance with at least some embodiments of the present invention, and

FIGURE 5 is a flow graph of a method in accordance with at least some embodiments of the present invention.

EMBODIMENTS

Methods are herein disclosed for determining radio resource configurations for radio access networks which employ network slicing, which enable effectively adapting the radio resource configurations dynamically to changes in network slice usage in the radio access network. In detail, network slice specific cost indices are determined which reflect a resource cost of increasing radio resources assigned to the specific network slice, and the radio resource configurations for configured network slices are updated based on the slice-specific cost indices. Using a network slice-specific reinforcement learning based neural network to determine the network slice-specific cost index for each slice enables, for example, adding a new network slice to the radio access network without re-training neural networks configured to determine cost indices of other, already existing network slices.

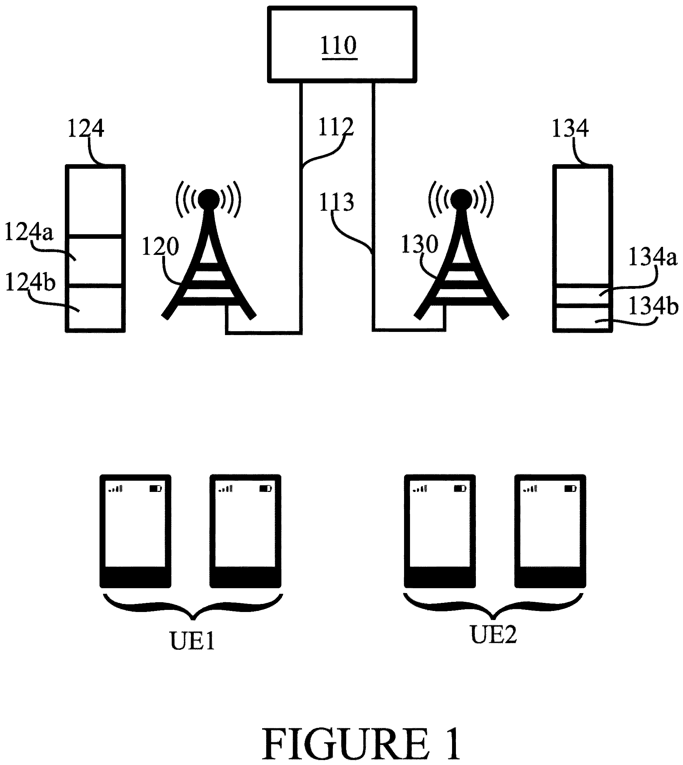

FIGURE 1 illustrates an example system in accordance with at least some embodiments of the present invention. Illustrated is a radio access network, RAN, comprising base stations 120, 130, and two sets of user equipments, UEs, set UE1 and set UE2. User equipments may comprise smartphones, feature phones, smart wearables such as smart watches or smart rings, Internet of Things, IoT, nodes and/or connected car connectivity modules, for example. Sets of UEs UE1, UE2 may each comprise plural user equipments, which need not be of a same type.

Base stations 120, 130 of the RAN may be unitary units, or they may be distributed base stations. A distributed base station comprises a centralized unit, CU, and one or more distributed unit, DU. The DUs are furnished with radio parts and handle radio link control, RLC, and medium access control, MAC, functions, while the CU may be configured to handle radio resource control, RRC, and packet data convergence protocol, PDCP, functions, for example. In a realistic physical network, the number of base stations may be in the hundreds, or even thousands, rather than the two illustrated in FIGURE 1.

A RAN controller 110 is distinct from the base stations 120, 130. The RAN controller 110 may be physically integrated with another network node, in some cases even a base station, or it may comprise a standalone physical node. RAN controller 110 may comprise a RAN intelligent controller, RIC, for example, which is configured to control the base stations of the RAN in near-real time. Such a RIC may be referred to as a near-real time RIC. By near-real time it may be meant that control of the RAN from RAN controller 110 takes place within one second or within 100 milliseconds, for example, of an event to which the RAN controller 110 is responding by the controlling. In some embodiments, the control of the RAN from RAN controller 110 does not take place sooner than within 10 milliseconds of the event to which the RAN controller is responding with the controlling. Thus, for example, the response time of the RAN controller may be within 10 to 100 milliseconds, 10 to 500 milliseconds or 10 to 1000 milliseconds, for example.

RAN controller 110 may control base station 120 via connection 112, and base station 130 via connection 113. Connections 112 and 113 may be wire-line connections, for example. Connections 112 and 113 may implement an E2 interface, for example, where the RAN is configured according to technology specified by the 3rd Generation Partnership Project, 3GPP. The RAN may be a 4th generation RAN, known as Long Term Evolution, LTE, or it may be a 5th generation RAN, which is known as New Radio, NR, for example.

The RAN supports plural network slices, which are logical separate networks operating on the same physical network. A network slice is, in general, given resources of the physical network in the RAN and in the core network, to enable the slice to perform toward its subscribers the normal functions of a wireless communication network. Toward the subscriber, the slice appears similar to a standalone physical network. Network slicing enables more effective use of installed physical resources. A network slice may have a service level agreement, SLA, which comprises a technical specification defining the quality of service which the physical network provides to the network slice. For example, the SLA may define that subscribers of the slice should have a guaranteed minimum bandwidth, a maximum latency, access to specific encryption functions, and/or access from a minimum coverage area, as defined in the SLA. Radio resource management strategies for network slicing at the RAN level are a key consideration for communications service providers, CSPs, in their quest to optimize the utilization of radio resources of their physical installed network. Machine learning, ML, based radio resource management, RRM, techniques are useful in efficiently providing the slices with radio resources. In particular, when targeting sub-second near-real time operations, the near-real time RIC may be seen as a useful asset for the training and deployment of machine learning based models for robust slice-specific RRM. A radio resource configurations for the slices may be an RRM decision.

A useful RRM solution should take into account the dynamic nature of network slicing. Not only does traffic within different network slices change rapidly, but also the number of slices configured in the RAN, the number of active users within a slice, as well as channel conditions and mobility patterns are all time variant, creating the need to dynamically manage radio resources to obtain the quality of service for slice users which is specified in the respective SLA.

In particular concerning the dynamically changing number of slices, the provisioning of a new network slice will result in the addition of a new slice to the network, while de-provisioning one would result in the removal of a slice from the network. Furthermore, RAN slices are often heterogeneous, for example, each slice may have different latency, throughput, and reliability requirements.

In FIGURE 1, the set of UEs UE1 is served by one or more cells controlled by base station 120. Respectively, the set of UEs UE2 is served by one or more cells controlled by base station 130. Set UE1 comprises subscribers of a first and a second slice active in the RAN. Likewise, set UE2 comprises subscribers of the first and the second slice active in the RAN. A set of radio resources 124 is used in communication between base station 120 and UE set UE1 in one or more cells controlled by base station 120. Likewise, A set of radio resources 134 is used in communication between base station 120 and UE set UE2 in one or more cells controlled by base station 130. From among radio resources 124, resources 124a are currently assigned to the first slice, and resources 124b are currently assigned to the second slice. In other words, a current radio resource configuration assigns resources 124a to the first slice and resources 124b to the second slice. Likewise, from among radio resources 134, resources 134a are currently assigned to the first slice, and resources 134b are currently assigned to the second slice.

Radio resources of the RAN, such as resources 124 and 134, may be defined in terms of frequency-time resources, frequency-code-time resources and/or frequency-code resources. Frequency-time resources comprise resources wherein at least one frequency is available according to a configured time schedule, for example, a single or repeating time slot on one or more frequency is a frequency-time resource. Frequency-code-time resources are resources wherein a spreading code, or codes, on one or more frequencies or one or more frequency bands are available according to a configured time schedule, such as a single or repeating time slot. A frequency-code resource is a spreading code on one or more frequencies or one or more frequency bands, available until configured otherwise. A frequency resource may comprise one or more frequency or frequency band, available until configured otherwise. In particular, radio resources may be defined in terms of resource blocks, RBs. A RB in an NR system, for example, comprises 12 subcarriers in the frequency domain and one millisecond in the time domain. In LTE as well, an RB comprises 12 subcarriers in the frequency domain.

An optimal way to divide resources 124, 134 between the first and second slices and, possibly, also other users of the physical RAN, presents an optimization problem. In principle, machine learning may be employed to determine the radio resource configurations, these being RRM decisions, by first training the machine learning solution with training data harvested from measured test environments and hand-optimized RRM decisions, to enable the machine learning solution to then determine new RRM decisions dynamically during use of the RAN to serve subscribers. However, a problem with typical machine learning solutions is that adding a new slice, or removing a previously configured slice, tends to require re-training of machine learning solutions, such as neural networks, of all the active slices when such a change in the set of configured slices is performed. This is problematic in terms of delay, and wasteful in terms of computation.

RRM mechanisms disclosed herein aim to maximize RAN data throughput, while satisfying the SLAs at each slice in terms of technical requirements assigned to connections established through these slices. This dynamic RRM problem exhibits the Markov property, that is, only the current RRM decision affects the next slice performance, with past decisions, relating to radio resource configurations no longer in use, having no impact in the future. Consequently such a system may be modelled as a constrained Markov decision process, CMDP. Since, in general, dynamics of the RAN are unknown, an online learning solution for the dynamic network slicing problem may be used to determine high quality RRM decisions. The proposed agent may be implemented as an xApp running on the near-real time RIC, for example. Xapps are an example of applications the RAN controller 110 may use to control base stations.

As discussed above, the present disclosure describes a dynamic slice-aware RRM decision-making process for RAN radio resources, that can adapt to changes in the number of configured RAN slices in the network. The RRM decision-making process aims for efficient utilization of radio resources at base stations within the RAN, while satisfying the respective SLA technical requirements at each slice also when system dynamics change. There is no need to reactively re-train ML agents of already configured slices, which would be computationally expensive and incur lags.

The dynamic RRM decision-making process is distributed to network slice-level subroutines, each subroutine participating in the RRM decision-making as it relates to its own slice. A reinforcement learning agent at every slice may be used to learn, or update, a slice-specific cost index at each subroutine. The cost indices are determined in the subroutines independently of each other. The cost index is designed as a scalar quantity whose value depends upon the characteristics of that slice, including its SLA constraints. The slice-level subroutines may be run in the RAN controller 110, for example.

The dynamic RRM decision-making process handles slice and network dynamics well, since each slice's cost index depends only on that specific slice's technical characteristics and has no relation to the number or nature of other RAN slices configured in the system. Thus the system can deal with rapidly changing slice dynamics and avoid repetitive re-training of the entire system responsive to events. Furthermore, since the framework at the slice level is agnostic to the overall number of slices in the system, it can seamlessly handle also changes in slice numbers. The herein disclosed RRM decision-making process promotes re-use of learnt knowledge when new slices and/or base stations are introduced into the system. Hence, it scales well under realistic use scenarios. The herein disclosed dynamic slice-aware RRM decision-making process may be integrated within the overall RAN system in the near-real time RIC, for example in the form of an Xapp.

The dynamic RRM decision-making may use an algorithm that allocates radio resources, such as resource blocks, RBs, among the configured slices based on the cost indices. In particular, this algorithm only allocates radio resources to the slices that are currently in the system, based on a deterministic approach that has low complexity and involves no learning overhead. This algorithm will be described in more detail herein below.

One example of a usable mechanism for the herein disclosed dynamic RRM decision-making process will be described next. The objective is to maximize the sum downlink throughput for all the slices at a specific base station, subject to the constraints of, firstly, slice-level SLA constraints, which may include, for example, maximum and/or minimum throughput per slice, maximum packet delay for all the UEs in the slice, and maximum packet loss rate for all the UEs in the slice. Secondly, system-level constraints may include, for example, a total quantity of radio resources, such as resource blocks, constrained to be below a threshold B.

We aim to solve the following discounted expected total reward formulation, with the notation that i is the slice index, j is the SLA constraint ID in the slice, st is the current state of the slice, which is a tuple (current throughput, previous action, RAN latency, RLC buffer occupancy) and at is the number of RBs allocated at time t to the slice, while $r_i(s_t, a_t)$ is the reward, which is the current throughput, at the slice i at time t, and $c_{ij}(s_t, a_t)$ is the constraint cost for $j^{th}$ constraint in the $i^{th}$ slice, with $\overline{C_{ij}}$ being its threshold, and $\gamma$ is a discount factor, which represents a tradeoff of importance between current reward and future rewards. B is the total number of RBs available to allocate. As mentioned above, a policy is sought that maximizes total downlink throughput, that being the reward while satisfying the constraints.

$$\text{Max}_\Pi \ \text{E}^\Pi\left[\sum_{i=1}^{N} \sum_{t=0}^{\infty} \gamma^t r_i\left(s_t^i, a_t^i\right) \big| s_0\right]$$

$$\text{s.t } c_{ij}\left(s_t^i, a_t^i\right) \leq \overline{C_{ij}}, \ \forall \ t \ \text{ for every } i = 1...N \text{ and } j = 1...M,$$

and

$$\sum_i a_t^i \leq B \ \forall \ t.$$

The solution of this optimization problem is a policy which defines the number of RBs allocated to each network slice. From the formulation above, it may be noted that the constraints are hard constraints, meaning that these need to be satisfied at every decision period. Without loss of generality, the following problem may be considered instead which has soft constraints, and make the reward and constraint formulations in similar expected form:

$$\text{Max}_\Pi \; E^\Pi[\textstyle\sum_{i=1}^N \sum_{t=0}^\infty \gamma^t r_i\left(s_t^i, a_t^i\right)|s_0]$$

$$\text{s.t} \; E^\Pi[\textstyle\sum_{t=0}^\infty \gamma^t c_{ij}\left(s_t^i, a_t^i\right)|s_0] \le \overline{C_{ij}}/(1-\gamma), \text{ for every } i = 1... N \text{ and } j = 1...M,$$

and

$$E^\Pi[\textstyle\sum_{i=1}^N \sum_{t=0}^\infty \gamma^t a_t^i|s_0] \le \frac{B}{1-\gamma}$$

Next, we form a Lagrangian relaxed formulation as follows, with penalties $\delta_{ij}$ and $\lambda$, for $ij^{th}$ SLA constraint and the total number of RBs constraint,

$$\text{Max}_\Pi \; [E^\Pi[\textstyle\sum_{i=1}^N \sum_{t=0}^\infty \gamma^t r_i\left(s_t^i, a_t^i\right) \qquad | \qquad s_0] +$$

$$\textstyle\sum_{i=1}^N \sum_{j=1}^M \delta_{ij}(E^\pi[\sum_{t=0}^\infty \gamma^t c_{ij}\left(s_t^i, a_t^i\right)|s_0] - \overline{C_{ij}}/(1-\gamma)) + \lambda \; (E^\pi[\sum_{i=1}^N \sum_{t=0}^\infty \gamma^t a_t^i|s_0] - \frac{B}{1-\gamma}) \; ]$$

This problem is equivalent to the following, by removing constants which are not affected by the policy $\Pi$,

$$\text{Max}_\Pi \; E^\Pi[\textstyle\sum_{i=1}^N \sum_{t=0}^\infty \gamma^t (r_i\left(s_t^i, a_t^i\right) + \sum_{j=1}^M \delta_{ij} c_{ij}\left(s_t^i, a_t^i\right) + \lambda \, a_t^i)|s_0]$$

However, the problem above is a centralized problem. In line with the design choice of decentralized, network-slice specific learning subroutines, we can decompose it into N individual problems: Thus, for each slice $i \in \{1, ..., N\}$, we obtain,

$$\text{Max}_\pi \; E^\pi[\textstyle\sum_{t=0}^\infty \gamma^t (r_i\left(s_t^i, a_t^i\right) + \sum_{j=1}^M \delta_{ij} c_{ij}\left(s_t^i, a_t^i\right) + \lambda \, a_t^i)|s_0].$$

Here $\pi$ is the policy for the decentralized per-slice solution. Then, the policy formed by the decentralized policies together yields the solution for the centralized problem, for example in the near real-time RIC. Finally, these per-slice problems may be coupled through the Lagrange multiplier $\lambda$.

At the network slice, a reinforcement learning environment has a state defined as, for example, current throughput, a previous action, latency, buffer occupancy, and RB utilization. The buffer occupancy may be occupancy of a RLC buffer, for example. A set of unknown transitions may include transitions such as: probability transitions: P(s'ls,a): the probability with which the current state s moves to next state s' by employing an action a. These transitions can be due to random variations in performance due to inherent uncertainties regarding channel conditions and other dynamic variables. Given a number of RBs, the state changes with some probability distribution, as a consequence of performance variations, changes in user-level traffic patterns, mobility, etc.

Next, for each of the resulting slice-level Markov decision process problems, a slice-specific cost index is introduced. This index represents a mapping from the state and action to a scalar value. These indices are useful for RRM decisions, and therefore, before proceeding forward with the resource allocation algorithm, we first detail the concept of the aforementioned slice-specific indices.

Slice-specific index: in the description below, the Lagrange multiplier $\lambda$ plays the role of the charge per unit of time and per unit resource consumed. With a specific notation, we may say that $\pi_i(\lambda:s)$ is the policy with a cost $\lambda$ per unit RB, as in the previous formulation. Let $P_i(\pi_i(\lambda),a) = \{s: \pi_i(\lambda; s) \le a \}$ : Set of all states such that the policy allocates resources at level a or below, for slice i. We assume that an index exists for every slice. Indeed, it can be shown that the slices are indexable. Slice i's index may be defined as

$$W_i(a, s) = \inf\{w: s \in P_i(\pi_i(\lambda), a)\},$$

that is, the index $W_i(a, s)$ may be thought of as a fair charge at slice i for raising the radio resource level of the slice from a to a + 1 in state s. The increase may reflect, for example, the allocation of an additional resource block, or other unit of radio resources. Were a resource charge less than $W_i(a, s)$ to be levied, the consumption of the additional resource would be preferable, while if the resource charge were to be in excess of the index, that would not be the case. The joint policy $\Pi(\lambda; s) = a$ if and only if $W_i(a_i - 1; s_i) > \lambda > W_i(a_i, s_i) \ \forall 1 \leq i \leq N$, and s.

Having described the concept of slice-specific indices, we now turn to the resource allocation algorithm. This allocation rule allocates RBs to slices such that the system-level constraints are satisfied. The algorithm of the present example has been inspired by the restless bandit control framework. In state s the index heuristic constructs an action, the action being allocation of resources, as follows:

Step 1: The initial allocation is 0 = {0, 0, ..., 0}. The current allocation is a = {$a_1$, $a_2$, ..., $a_N$} with $\Sigma_i a_i \leq B$.

Step 2: Choose any i satisfying $W_i(a_i, s_i) = \max_{1 \leq j \leq N} W_j(a_j, s_j)$.

Step 3: If $\mathbf{e}_i$ denotes a N -vector whose $i^{th}$ component is 1 with zeroes elsewhere, the new deployment is a + $\mathbf{e}_i$ if $(\Sigma_{j \neq i} a_j) + a_i + 1 \leq B$ . If there is strict inequality in this, return to Step 1 and repeat. Otherwise, stop and declare a + $\mathbf{e}_i$ to be the chosen action in s. If $(\Sigma_{j \neq i} a_j) + a_i + 1 > B$, then, stop and declare a to be the chosen action in s.

The allocation scheme above needs to know the value of the slice-specific cost indices described herein above. Due to the complex and dynamic nature of the RAN environment, we cannot compute these indices in a closed form. Instead, we employ a machine learning mechanism, such as an artificial neural network, which may be based on reinforcement learning principles. We now provide an efficient reinforcement learning approach to learn these indices.

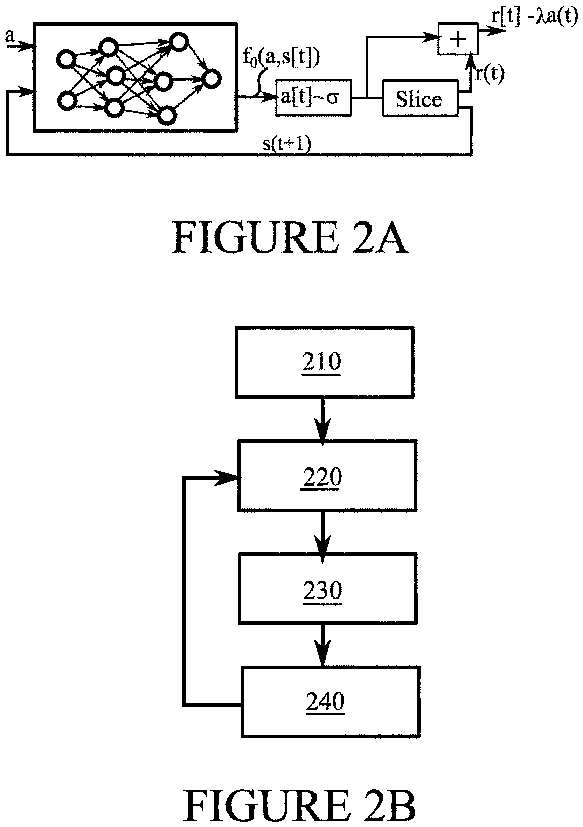

For learning the slice-specific cost index, we follow in this example the reinforcement learning approach depicted in FIGURE 2A. Here, $\sigma$ is a sigmoid function, that makes each slice's policy $\pi(\lambda:s)$ differentiable instead of an indicator function as described previously. In order to learn the slice-specific cost indices, we use the algorithm described below in connection with FIGURE 2B, which is a policy gradient-based algorithm. Here a slice's index function is approximated using an artificial neural network based on deep reinforcement learning, such that an output of the neural network is the predicted slice-specific cost index value for the current state and action pair. A policy may then be formed using this cost index, which prescribes an amount of resources, such as a number of RBs, should be allocated to this specific slice. The RRM decision-making process may then allocate these resources to the slice, causing the slice to transition to the next state, and the process will repeat. To train the neural network to match the actual slice cost indices, an agent may take the gradient of the policy as a loss function and perform a gradient ascent. This training may take place over plural episodes, and takes places in a decentralized manner, that is, there is one such training for each one of the slices. Using Algorithm 1 described below, we note that Algorithm 1 runs in batches. Under each batch, it fixes a cost $\lambda$ and runs several trajectories, in the form of episodes. In each episode, Algorithm 1 takes the state and action as input and predicts the index from the neural network. It then uses this index to formulate a policy and takes that action in the RAN controller 110 to collect the next state and reward from the environment. It then computes the gradient of the policy and performs gradient descent to train the neural network. This training is conducted at per-slice level, and the RAN controller allocates resources to the slice in question as the algorithm suggests. Once the algorithm converges, no more training is needed, and we can use the neural network as a black box to collect the slice-specific cost indices. When a new slice enters in the system, its index must be learned via the algorithm of FIGURE 2B. The rest of the slices need not be trained again when either a slice enters or leaves the system. Since the learning process is just for the new slice, the learning is expected to be much faster.

In FIGURE 2B, phase 210 corresponds to initializing neural network parameters. Phase 220 corresponds to running an episode in a mini batch and fixing a cost $\lambda$. Phase 230 corresponds to choosing, at each round in the episode, an action and accumulating a policy gradient, and empirical discounted throughput. Phase 240 corresponds to updating neural network parameters using, for example, a gradient ascent method. Processing returns from phase 240 to phase 220. Algorithm 1 may be defines as follows:

**Algorithm 1**

1: Input: Parameters $\theta$, discount factor $\beta \in (0,1)$, learning rate L, sigmoid parameter m, mini batch size R.

2: Output: Trained Neural Network parameters $\theta^+$.

3: for mini batch b do

4:          Choose two states s0, s1, action a0 randomly, and set $\lambda \leftarrow f_\theta[a0, s0]$ and $\overline{G}_b[so] \leftarrow 0$.

5:          for each episode e in the mini-batch do

6:                    set the arm to initial state s1, and set $h_e[s0] \leftarrow 0$.

7.                    for each round t in the episode do

8.                              Choose $a[t] = a$ w.p. $\sigma_m(f_\theta[a-1, s_t] - \lambda)(1 - \sigma_m(f_\theta[a,st] - \lambda)$

9.                                        if $a[t] = a$, then

10.                                        $h_e \leftarrow h_e + \nabla_\theta(\ln(\sigma_m(f_\theta(a-1, s_t)) - \lambda) + \ln(1 - \sigma_m(f_\theta[a,st] - \lambda))$

11.                                        end if

12.                              end for

13:                    $G_e \leftarrow$ empirical discounted reward in episode e

14:                    $\overline{G}_b \leftarrow \overline{G}_b + G_e/R$.

15:          end for

16: L $\leftarrow$ learning rate

17. Update parameters through gradient ascent $\theta \leftarrow \theta + L \Sigma_e(G_e - G_b)h_e$.

18: end for

In summary, the herein disclosed RRM decision-making process provides benefits in that the cost indices are updated in a decentralized maker, separately for each network slice in a slice-specific process. This addresses the problem presented by a dynamically changing number of slices without needing to re-train the system. Further, the proposed RRM mechanism scales well with the number of slices, since the restless bandit approach provides that allocation policy based on cost indices converges to optimality asymptotically when the number of arms increases.

An RRM decision-making process in the RAN controller 110 may be constructed to have, for example, three main modules, a data processor, a decentralized indexer, and a radio resource allocator. The data processor module would be responsible for subscribing to the operating statistics being streamed from the RAN. Upon obtaining the statistics, the data processor may format the received UE-level statistics into composite slice-level statistics that are then sent to the decentralized indexer. The data processor may also be responsible for formatting the determined RAN radio resource configuration before it is sent to the RAN.

The decentralized indexer module may contain decentralized reinforcement learning agents, including Algorithm 1 described above, or a similar algorithm, that are used for obtaining the slice-specific cost indices. This module may also be responsible for training the decentralized agents. The slice-specific indices are further sent to the allocator module.

The allocator module may implement the proposed allocation algorithm, which may be configured to provide just-in-time radio resource configurations. By leveraging the learned cost indices, the allocation algorithm of the allocator may determine the per-slice radio resource configurations, which are then sent to the RAN.

As discussed herein above, the RRM decision-making process may be implemented in a near-real time RIC and it may leverages standardized key performance measurement monitor functionalities of the RAN. More specifically, RAN UE-level operating statistics collected from the base stations may include one, more than one, or all of the following: UE-level throughput, UE-level latency, UE-level RLC buffer occupancy and UE-level radio resource utilization. Slice-level operating statistics may correspondingly comprise one, more than one, or all of the following: slice-level throughput, slice-level average latency, slice-level average RLC buffer occupancy and slice-level radio resource utilization.

These statistics are leveraged by the RRM decision-making process for determining the slice-specific cost indices and consequently the per-slice radio resource configuration at each base station, as described above. The resulting configuration includes a per-slice radio resource allocation, for example in RBs.

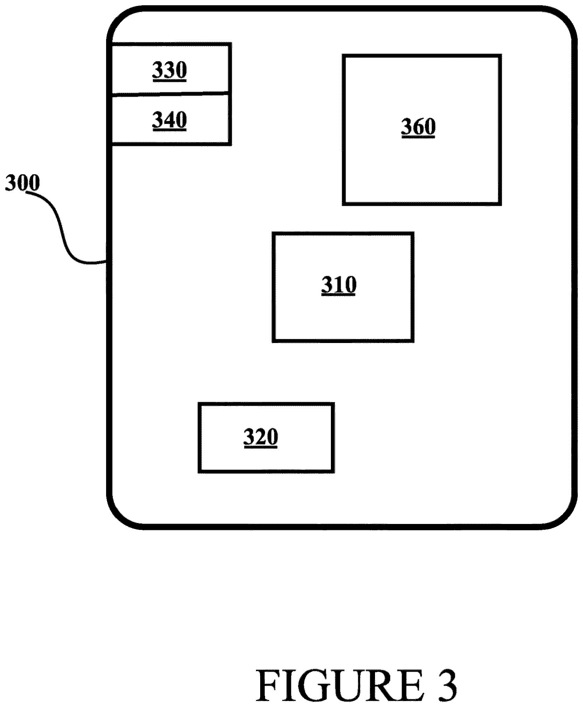

FIGURE 3 illustrates an example apparatus capable of supporting at least some embodiments of the present invention. Illustrated is device 300, which may comprise, for example, a mobile communication device such as mobile 110 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as obtaining, updating, determining, controlling and initializing for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server or other computing substrate, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure RAN control parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

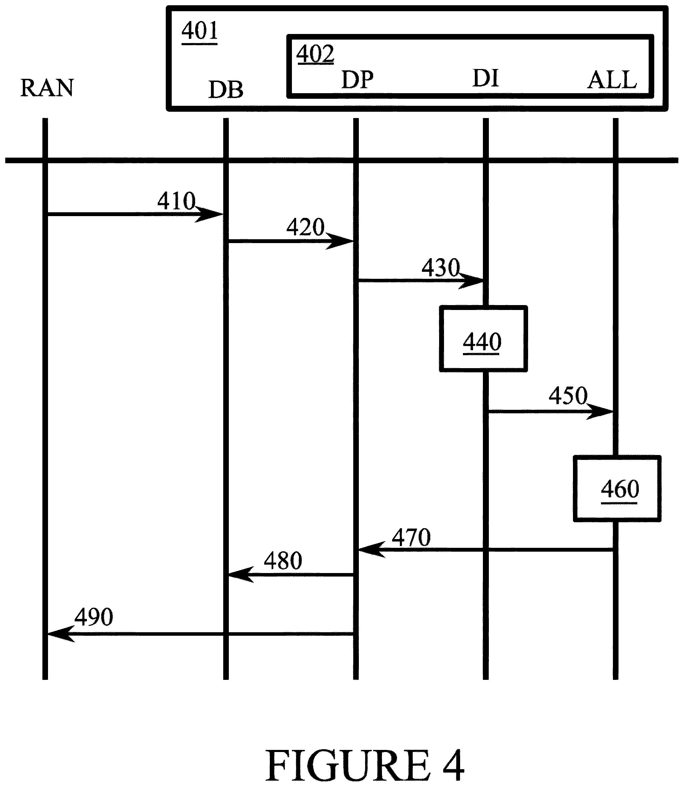

FIGURE 4 illustrates signalling in accordance with at least some embodiments of the present invention. On the vertical axes are disposed, on the left, a RAN, and a RAN controller 401, such as, for example, a near-real time RIC. The RAN controller comprises a database DB, a data processor DP, a decentralized indexer DI and an allocator ALL. The data processor DP, the decentralized indexer DI and the allocator ALL are comprised in an RRM controller 402 tasked with determining radio resource configurations for the RAN. Time advances from the top toward the bottom.

In phase 410, RAN statistics are received in the RAN controller 401. In phase 420, UE-level RAN statistics are obtained from the RAN statistics received in phase 410, and forwarded to the RRM controller 402. In phase 430, slice-level statistics are obtained in the RRM controller 442, and provided to the decentralized slice-level subroutines for generation of the slice-specific cost indices based at least in part on the slice-level statistics, which takes place in phase 440. The cost indices are then provided, phase 450, to the allocation algorithm which uses them, phase 460, to generate a radio resource configuration, allocating RAN radio resources to network slices configured in the system.

The generated radio resource configuration is provided in the RRM controller in phase 470 and 480, and to the RAN in phase 490. The internal architecture of RRM controller 402 in FIGURE 4 is merely an example. In some embodiments, for example, phases 470 and 480 are absent, and the generated radio resource configuration is provided directly from the module running the allocation algorithm to the RAN.

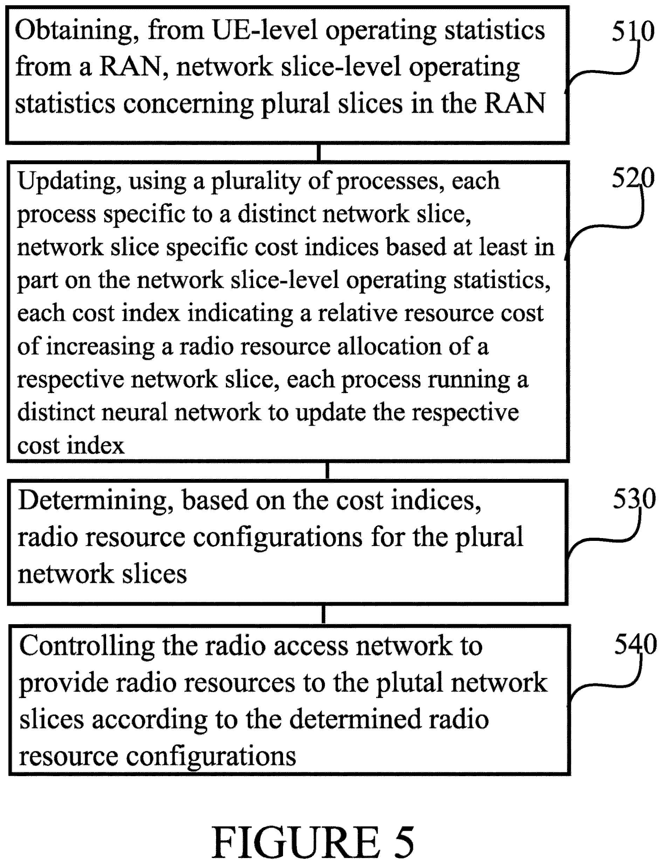

FIGURE 5 is a flow graph of a method in accordance with at least some embodiments of the present invention. The phases of the illustrated method may be performed in a RAN controller 110, such as RRM controller 402, for example, or in a control device configured to control the functioning thereof, when installed therein.

Phase 510 comprises obtaining, from user equipment-level operating statistics from a radio access network, network slice-level operating statistics concerning plural network slices in the radio access network. Phase 520 comprises updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index. Phase 530 comprises determining, based on the cost indices, radio resource configurations for the plural network slices. Finally, phase 540 comprises controlling the radio access network to provide radio resources to the plural network slices according to the determined radio resource configurations.

In general, a radio resource configuration is sought by the allocation algorithm which maximizes total downlink throughput, that being the reward in optimization, while satisfying the constraints from SLAs and a maximum amount of radio resources available. The cost indices are determined in the subroutines independently of each other. The cost index is designed as a scalar quantity whose value depends upon the characteristics of that slice, including its SLA constraints. Each slice's cost index depends only on that specific slice's technical characteristics and has no relation to the number or nature of other RAN slices configured in the system. The cost index represents a mapping from the state and action to a scalar value. The index indicates a resource cost of increasing radio resources assigned to the specific network slice. The slice indices are a function of the slice's state and the number of resource blocks. Its value indicates the performance of the slice in a state if it were given a number of resource blocks. Hence, if a number of resource blocks are allocated to a slice with high value of the index for that number, we get better overall performance value. Since a slice's index is a function of the state and resource allocation of the slice, it is driven by transition dynamics of the slice. It is usually a value that depends upon the system dynamics, state, and the chosen resource allocation objective. For a dynamic and complex system like a RAN, it is difficult to describe this relationship exactly, or establish it analytically. Hence, in this disclosure a reinforcement learning neural network algorithm is employed to determine the index in an dynamic manner.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in managing communication networks.

ACRONYMS LIST

| | |
|---|---|
| 3GPP | 3rd Generation Partnership Project |
| 5G | fifth generation |
| CMDP | constrained Markov decision process |
| CSP | communication service provider |
| CU | centralized unit |
| DU | distributed unit |
| LTE | long term evolution |
| MAC | medium access control |
| NR | new radio |
| PDCP | packet data convergence protocol |
| RAN | radio access network |
| RIC | RAN intelligent controller |
| RLC | radio link control |
| RRC | radio resource control |
| RRM | radio resource management |
| SLA | service level agreement |
| UE | user equipment |

REFERENCE SIGNS LIST

| 110, 401 | RAN controller |
|---|---|
| 112, 113 | Connection (e.g. E2) |
| 120, 130 | Base station |
| 124, 134 | Radio resources |
| 124a, 124b, 134a, 134b | Allocated radio resources |
| 210 - 340 | Phases of the method of FIGURE 2B |
| 300 - 360 | Structure of the device of FIGURE 3 |
| 402 | RRM controller |
| 410 - 490 | Phases of the method of FIGURE 4 |
| 510 - 540 | Phases of the method of FIGURE 5 |

**Claims**

1. A apparatus comprising means for:

   - obtaining, from user equipment-level operating statistics from a radio access network, network slice-level operating statistics concerning plural network slices in the radio access network;
   - updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index;
   - determining, based on the cost indices, radio resource configurations for the plural network slices, and
   - controlling the radio access network to provide radio resources to the plural network slices according to the determined radio resource configurations.

2. The apparatus according to claim 1, wherein the artificial neural network comprises a reinforcement learning machine learning solution, and wherein the apparatus comprises further means for updating parameters of the neural network in connection with updating the cost indices.

3. The apparatus according to claim 2, further comprising initializing a new network slice and initializing a respective process to update a cost index specific to the new network slice, wherein the initialization of the respective process comprises initialization of a neural network of the respective process, wherein neural networks of processes already in use are not re-initialized in connection with initializing the respective process.

4. The apparatus according to any of claims 1-3, comprising performing the updating of the cost indices, the determining of the radio resource configurations and the controlling of the radio access network responsive to a change in the number of users in at least one of the plurality of network slices or a removal of a network slice from among the plurality of network slices.

5. The apparatus according to any of claims 1 - 4, wherein the user equipment-level operating statistics comprise one, more than one, or all of the following: user equipment-level throughput, user equipment-level latency, user equipment-level radio link control buffer occupancy and user equipment-level radio resource utilization rate.

6. The apparatus according to any of claims 1-5, comprising performing the updating of the cost indices, the determining of the radio resource configurations and the controlling of the radio access network responsive to an event within 1 second of the event.

7. The apparatus according to claim 6, comprising performing the updating of the cost indices, the determining of the radio resource configurations and the controlling of the radio access network responsive to an event within 100 milliseconds of the event.

8. The apparatus according to claim 6 or 7, wherein the apparatus comprises a radio access network controller which is distinct from nodes of the radio access network.

9. The apparatus according to claim 8, wherein the apparatus further comprises means for performing the function of a near-real time radio access network intelligent controller, near-RT RIC.

10. The apparatus according to any of claims 1-9, comprising determining, by each one of the plurality of processes, its network slice specific cost index based solely on characteristics of the network slice the cost index relates to and not on characteristics of other network slices.

11. A method comprising:

- obtaining, from user equipment-level operating statistics from a radio access network, network slice-level operating statistics concerning plural network slices in the radio access network;
- updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index;
- determining, based on the cost indices, radio resource configurations for the plural network slices, and
- controlling the radio access network to provide radio resources to the plural network slices according to the determined radio resource configurations.

12. The method according to claim 11, wherein the artificial neural network comprises a reinforcement learning machine learning solution, and wherein the method comprises updating parameters of the neural network in connection with updating the cost indices.

13. The method according to claim 12, further comprising initializing a new network slice and initializing a respective process to update a cost index specific to the new network slice, wherein the initialization of the respective process comprises initialization of a neural network of the respective process, wherein neural networks of processes already in use are not re-initialized in connection with initializing the respective process.

14. The method according to any of claims 11 - 13, comprising performing the updating of the cost indices, the determining of the radio resource configurations and the controlling of the radio access network responsive to a change in the number of users in at least one of the plurality of network slices or a removal of a network slice from among the plurality of network slices.

15. A computer program comprising instructions which, when executed by an apparatus, cause the apparatus to perform at least the following:

- obtain, from user equipment-level operating statistics from a radio access network, network slice-level operating statistics concerning plural network slices in the radio access network;
- update, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index;
- determine, based on the cost indices, radio resource configurations for the plural network slices, and
- control the radio access network to provide radio resources to the plural network slices according to the determined radio resource configurations.

FIGURE 1

# FIGURE 2A

# FIGURE 2B

**FIGURE 3**

FIGURE 4

Obtaining, from UE-level operating statistics from a RAN, network slice-level operating statistics concerning plural slices in the RAN     510

Updating, using a plurality of processes, each process specific to a distinct network slice, network slice specific cost indices based at least in part on the network slice-level operating statistics, each cost index indicating a relative resource cost of increasing a radio resource allocation of a respective network slice, each process running a distinct neural network to update the respective cost index     520

Determining, based on the cost indices, radio resource configurations for the plural network slices     530

Controlling the radio access network to provide radio resources to the plutal network slices according to the determined radio resource configurations     540

# FIGURE 5

Europäisches
Patentamt

European
Patent Office

Office européen
des brevets

## EUROPEAN SEARCH REPORT

Application Number

EP 24 16 6164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEONGBOK BAIK KT ET AL: "Machine learning in 5G and future networks: use cases and basic requirements;ML5G-I-118-R8", ITU-T DRAFT; STUDY PERIOD 2017-2020; FOCUS GROUP ML5G; SERIES ML5G-I-118-R8, INTERNATIONAL TELECOMMUNICATION UNION, GENEVA ; CH , vol. 1 19 February 2019 (2019-02-19), pages 1-48, XP044262760, Retrieved from the Internet: URL:https://extranet.itu.int/sites/itu-t/f ocusgroups/ML5G/input/ML5G-I-118-R8.docx [retrieved on 2019-02-19] * paragraph [04.8] * ----- | 1-15 | INV. H04W24/02 ADD. H04W88/12 H04L41/16 G06N20/00 |
| A | WO 2023/283102 A1 (INTEL CORP [US]) 12 January 2023 (2023-01-12) * the whole document * ----- | 1-15 | |

TECHNICAL FIELDS SEARCHED (IPC)

H04W

The present search report has been drawn up for all claims

| Place of search | Date of completion of the search | Examiner |
|---|---|---|
| Munich | 14 August 2024 | Koutsopoulou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6164

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2024

| Patent document cited in search report | Publication date | Patent family member(s) | Publication date |
|---|---|---|---|
| WO 2023283102 A1 | 12-01-2023 | NONE | |

For more details about this annex : see Official Journal of the European Patent Office, No. 12/82

EPO FORM P0459